# EUROPEAN PATENT APPLICATION

(11) **EP 4 826 624 A1**
(43) Date of publication of application: **21.10.2026**
(21) Application number: 26171421.6
(22) Date of filing: 09.04.2026
(51) Int. Cl.: G06Q 10/20, G06Q 10/06

(54) **MAINTENANCE MANAGEMENT SUPPORT SYSTEM AND MAINTENANCE MANAGEMENT SUPPORT METHOD**

(30) Priority: 15.04.2025 JP 2025066728
(71) Applicant: Hitachi, Ltd., Tokyo 100-8280 (JP); Hitachi GE Vernova Nuclear Energy, Ltd., Hitachi-shi, Ibaraki 317-0073 (JP)
(72) Inventor: HOSOKAWA, Yuji, Ibaraki, 317-0073 (JP); ISHIDA, Kazuya, Tokyo, 100-8280 (JP); OSAKA, Masaaki, Tokyo, 100-8280 (JP); KONISHI, Wataru, Tokyo, 100-8280 (JP); ISHIWATARI, Yuki, Tokyo, 100-8280 (JP)
(74) Representative: MERH-IP Matias Erny Reichl Hoffmann Patentanwälte PartG mbB

(57) **Abstract**

Provided is a maintenance management support system including a terminal device including a display unit, and an information processing device that causes the display unit to display maintenance management information about a plurality of pieces of equipment installed in a facility, wherein the information processing device includes a layout information holding unit that holds layout information about the facility, the layout information including an arrangement of the plurality of pieces of equipment, a maintenance information holding unit that holds maintenance information about the each piece of equipment, and an input/output control unit that causes the display unit to display the maintenance information about the each piece of equipment, the maintenance information being held by the maintenance information holding unit, in association with the each piece of equipment indicated by the layout information.

## Description

### BACKGROUND

### Technical Field

The present invention relates to a maintenance management support system and a maintenance management support method.

### Related Art

As a technique for supporting maintenance management of equipment under a radiation environment, Patent Literature 1 below describes "the radiation dose distribution in the radiation environment recognition target space is obtained based on a position of the detector module, the position being identified by the module position detector, and a radiation dose signal received by the radiation dose signal receiver, and the radiation dose distribution is superimposed on a model of equipment existing in the radiation environment recognition target space and displayed as a visible image on a screen" and "the operator can easily grasp the radiation environment in real time from the distribution of the radiation dose in the radiation environment recognition target space, the distribution of the radiation dose being visually displayed on the screen by, for example, color coding or concentration change according to the dose, and ... can easily check how far away from the radiation source the work site is required to be in order to ensure work safety.

### Citation List

### Patent Literature

Patent Literature 1: JP 2008-26185 A

### SUMMARY

Incidentally, it is required to perform maintenance work such as inspection and testing at a predetermined cycle for a large number of pieces of equipment disposed in a large-scale facility such as a nuclear power plant. However, in a large-scale facility, each of a plurality of operators may be in charge of maintenance of a plurality of pieces of equipment, or maintenance operators may be replaced. For this reason, it is not easy for all the operators to grasp the inspection date and the testing date of the enormous number of pieces of equipment and the procedures of the inspection and the testing.

Therefore, an object of the present invention is to provide a maintenance management support system and a maintenance management support method capable of appropriately performing maintenance management of a plurality of pieces of equipment without depending on the experience of an operator.

In order to solve the above problem, for example, the configuration described in the claims is used.

The present application includes a plurality of means for solving the above problems, and an example thereof is a maintenance management support system including a terminal device including a display unit, and an information processing device that causes the display unit to display maintenance management information about a plurality of pieces of equipment installed in a facility, wherein the information processing device includes a layout information holding unit that holds layout information about the facility including an arrangement of the plurality of pieces of equipment, a maintenance information holding unit that holds maintenance information about the each piece of equipment, and an input/output control unit that causes the display unit to display the maintenance information about the each piece of equipment, the maintenance information being held by the maintenance information holding unit, in association with the each piece of equipment indicated by the layout information.

According to the present invention, it is possible to provide a maintenance management support system and a maintenance management support method capable of appropriately performing maintenance management of a plurality of pieces of equipment without depending on the experience of an operator.

### BRIEF DESCRIPTION OF DRAWINGS

FIG. 1 is a block diagram of a maintenance management support system according to the embodiment;
FIG. 2 is a diagram illustrating a display example (part 1) of a display unit of the maintenance management support system according to the embodiment;
FIG. 3 is a diagram illustrating a display example (part 2) of the display unit of the maintenance management support system according to the embodiment;
FIG. 4 is a diagram illustrating a display example (part 3) of the display unit of the maintenance management support system according to the embodiment;
FIG. 5 is a diagram illustrating a display example (part 4) of the display unit of the maintenance management support system according to the embodiment;
FIG. 6 is a diagram illustrating a display example (part 5) of the display unit of the maintenance management support system according to the embodiment;
FIG. 7 is a diagram illustrating a display example (part 6) of the display unit of the maintenance management support system according to the embodiment; and
FIG. 8 is a diagram illustrating a display example (part 7) of the display unit of the maintenance management support system according to the embodiment.

### DETAILED DESCRIPTION

Hereinafter, embodiments of a maintenance management support system and a maintenance management support method of the present invention will be described with reference to the drawings.

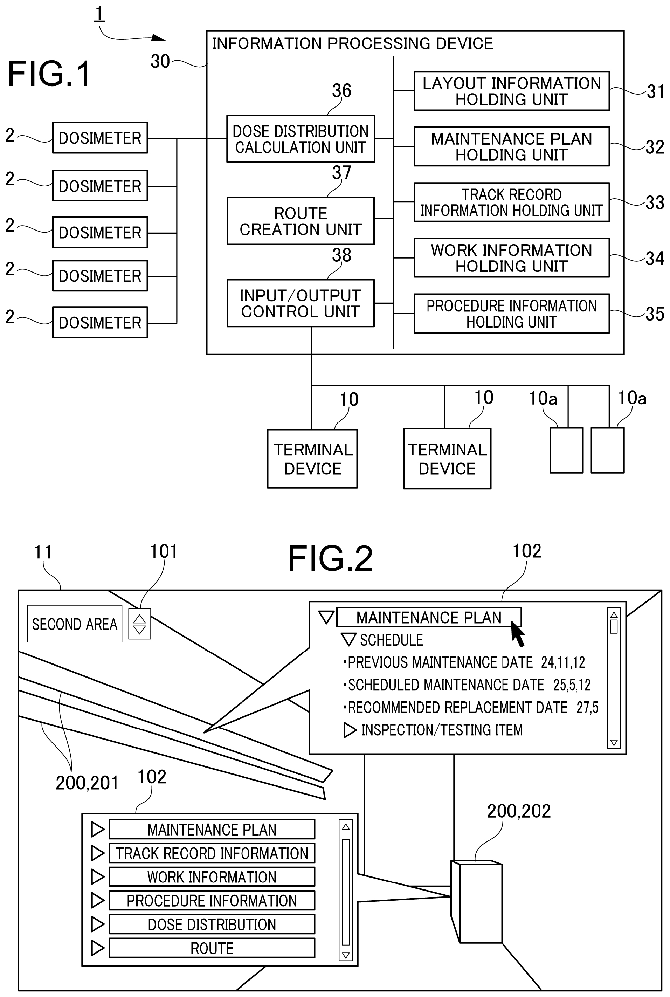

FIG. 1 is a block diagram of a maintenance management support system 1 according to the embodiment. The maintenance management support system 1 illustrated in FIG. 1 is a system for supporting maintenance management of a plurality of pieces of equipment installed in a facility. The facility is a large-scale facility in which a plurality of pieces of equipment is installed. Here, a nuclear power plant will be described as an example of the facility, but the facility is not limited thereto. In addition, the equipment requires maintenance management such as inspection and testing, and is, for example, electric paths such as electric conduits and trays, cables, pipes, electric motors, pumps, power panels, control panels, heat exchangers, various valves, fire extinguishing cylinders, and the like. These pieces of equipment require maintenance work in a period set according to each piece of equipment, such as periodic replacement work and, for example, measurement of a wall thickness in the case of a pipe, in addition to inspection and testing of the presence or absence of damage and whether to operate accurately. In the following description, operations including the above-described inspection, testing, and replacement will be referred to as maintenance work.

The maintenance management support system 1 described in the present embodiment supports maintenance management including inspection and testing of equipment in a facility as described above, various measurement, and the like. Such a maintenance management support system 1 includes a terminal device 10, a mobile terminal device 10a, and an information processing device 30. Next, a configuration of each unit constituting the maintenance management support system 1 will be described based on FIG. 1 and with reference to other drawings.

### <Terminal device 10>

The terminal device 10 has a display unit and an input function, and the input function is a touch panel of the display unit, a keyboard, a mouse, or the like. Such a terminal device 10 is a personal computer that can be connected to the information processing device 30 in a wireless or wired manner, and is installed at a predetermined location in or outside the facility.

### <Mobile terminal device 10a>

The mobile terminal device 10a has a display unit and an input function, and the input function may be a touch panel of the display unit. Such a mobile terminal device 10a is equipment that can be connected to the information processing device 30 in a wireless or wired manner, and is held by an operator who performs maintenance work.

### <Information processing device 30>

The information processing device 30 is configured by a calculator that causes the display unit of the terminal device 10 and the mobile terminal device 10a to display information for supporting maintenance management of each piece of equipment installed in a facility. The calculator is hardware used as a so-called computer, and includes a central processing unit (CPU), a random access memory (RAM), and a non-volatile storage unit such as a read only memory (ROM), and further includes a network interface.

Such an information processing device 30 includes a plurality of functional units that causes a display unit of each of the terminal device 10 and the mobile terminal device 10a to display information for supporting maintenance management of each piece of equipment. The functional units included in the information processing device 30 are a layout information holding unit 31, a maintenance plan holding unit 32, a track record information holding unit 33, a work information holding unit 34, and a procedure information holding unit 35. Among them, the maintenance plan holding unit 32, the track record information holding unit 33, the work information holding unit 34, and the procedure information holding unit 35 constitute a maintenance information holding unit. The functional units included in the information processing device 30 are a dose distribution calculation unit 36, a route creation unit 37, and an input/output control unit 38. These functional units are as follows.

### [Layout information holding unit 31]

The layout information holding unit 31 holds layout information in a facility, the layout information including an arrangement of a plurality of pieces of equipment. The layout information held by the layout information holding unit 31 is three-dimensional information for displaying the arrangement of each area in the facility and the arrangement location and arrangement state of the equipment in each area on the display units of the terminal device 10 and the mobile terminal device 10a.

FIG. 2 is a diagram illustrating a display example (part 1) of a display unit 11 of the maintenance management support system 1 according to the embodiment. The display unit 11 is a display unit of each of the terminal device 10 and the mobile terminal device 10a. As illustrated in FIG. 2, the three-dimensional information held by the layout information holding unit 31 is displayed as a virtual space on the display unit 11 by processing by the input/output control unit 38 described below.

Further, among the layout information held by the layout information holding unit 31, the layout information about the area (here, the second area) selected by an area selection unit 101 displayed on the display unit 11 is displayed on the display unit 11 by processing by the input/output control unit 38 described below. In this case, equipment 200 (for example, an electric path 201 and the heat exchanger 202) installed in the selected area is displayed in the virtual space. As a result, the operator can easily image the arrangement state of the equipment in the facility.

### [Maintenance plan holding unit 32]

The maintenance plan holding unit 32 is one of the maintenance information holding units, and holds a maintenance plan for each piece of equipment 200 disposed in the facility. The maintenance plan held by the maintenance plan holding unit 32 is a maintenance schedule and a maintenance item such as an inspection/testing item as illustrated in an item selection unit 102 displayed on the display unit 11 in FIG. 2. Among them, the maintenance schedule includes a latest inspection or testing schedule (previous maintenance date), a next inspection or testing execution schedule (scheduled maintenance date), a recommended date on which the equipment 200 is replaced next (recommended replacement date), and the like. In addition, the maintenance plan held by the maintenance plan holding unit 32 includes work content of inspection/testing, determination criteria in a case where a test is performed as an inspection, and the like.

In the maintenance plan held by the maintenance plan holding unit 32, an item (here, a schedule) selected by the operation of the item selection unit 102 displayed on the display unit 11 is displayed on the display unit 11 by processing by the input/output control unit 38 described below. As a result, the operator can reliably grasp the maintenance plan for the target equipment 200 among the plurality of pieces of equipment 200.

Note that the item selection unit 102 is displayed in association with each piece of equipment, and is configured to be able to select an item for each piece of equipment.

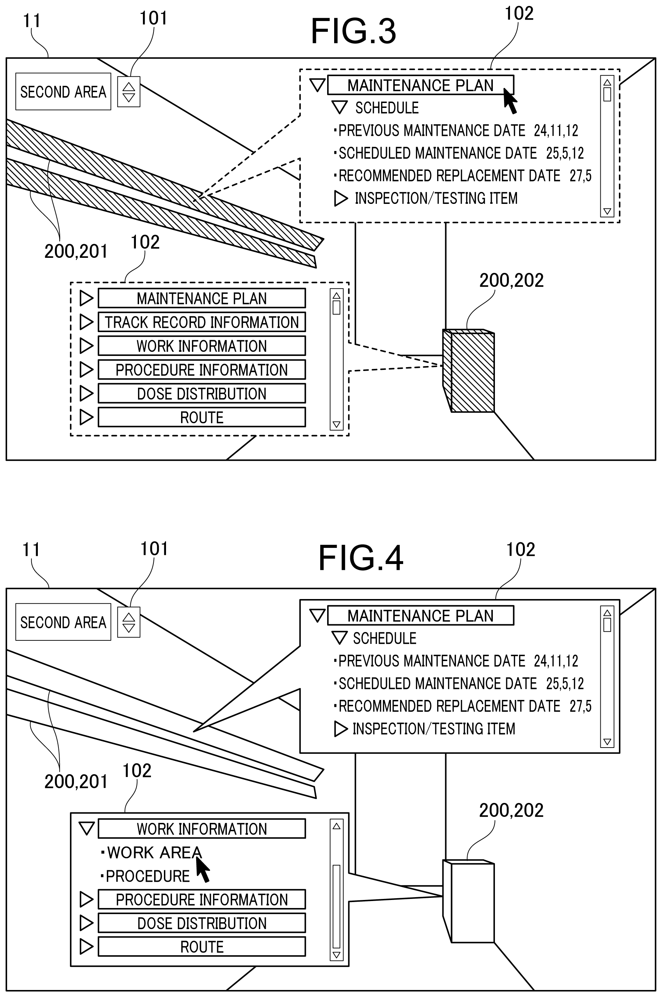

FIG. 3 is a diagram illustrating a display example (part 2) of the display unit 11 of the maintenance management support system 1 according to the embodiment. As illustrated in FIG. 3, the maintenance plan holding unit 32 refers to a real-time clock (RTC) included in the information processing device 30, and identifies the equipment 200 whose scheduled maintenance date falls within a predetermined number of days from the current date and time. As a result, the input/output control unit 38 described below performs marking such as coloring or blinking on the equipment 200 identified by the maintenance plan holding unit 32 and the item selection unit 102 associated therewith. As a result, it is possible to effectively notify the operator that the scheduled maintenance date is close or has elapsed.

### [Track record information holding unit 33]

The track record information holding unit 33 (FIG. 1) is one of the maintenance information holding units, and holds track record information about maintenance management performed on each piece of equipment disposed in the facility. The track record information held by the track record information holding unit 33 is a maintenance schedule on which inspection or testing has been performed, and result information about maintenance such as inspection or testing. The result information includes an inspection numerical value when a test is performed as an inspection.

When the display of the track record information is selected by the operation of the item selection unit 102 displayed on the display unit 11, the track record information held by the track record information holding unit 33 is displayed on the display unit 11 by processing by the input/output control unit 38 described below. As a result, the operator can easily check the track record information about the past maintenance management of the target equipment 200.

### [Work information holding unit 34]

The work information holding unit 34 (FIG. 1) is one of the maintenance information holding units, and holds work information about maintenance of each piece of equipment disposed in the facility. The work information is information about a work area necessary for maintenance such as inspection or testing of each piece of equipment and information about a work procedure.

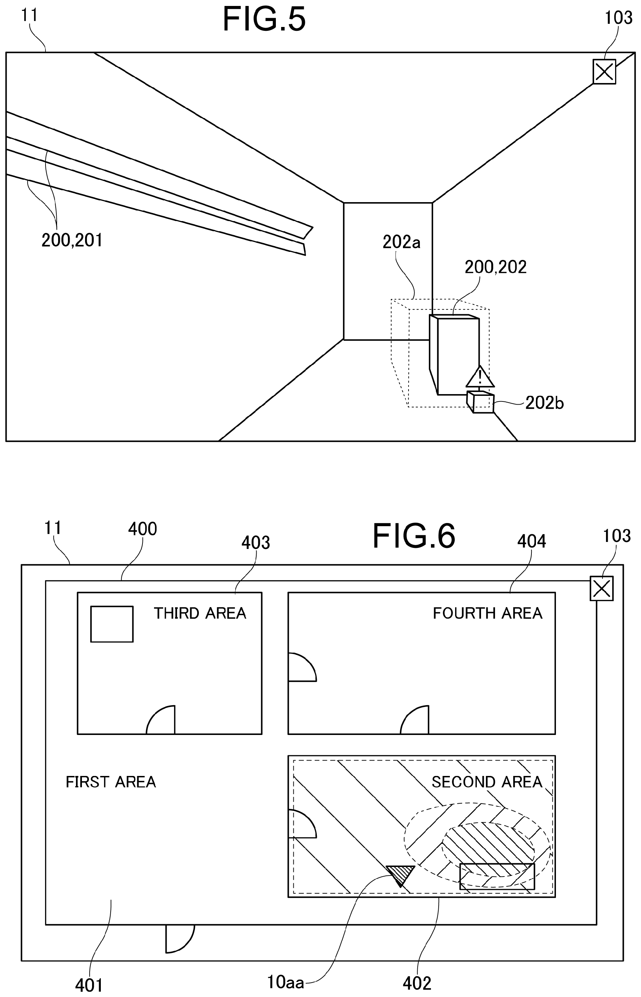

FIGS. 4 and 5 are diagrams illustrating display examples (part 3) and (part 4) of the display unit 11 of the maintenance management support system 1 according to the embodiment. When the display of the work information is selected by the operation of the item selection unit 102 of each piece of equipment 200 displayed on the display unit 11, the work information held by the work information holding unit 34 is displayed on the display unit 11 by processing by the input/output control unit 38 described below. For example, when the work area in the work procedure is selected (see FIG. 4), a work area 202a of a corresponding heat exchanger 202 and an obstacle 202b disposed in the work area 202a are displayed in the virtual space (FIG. 5). As a result, the operator can grasp an area required for maintenance work of the target equipment 200 in advance before starting the work.

Furthermore, the information about the procedure may be moving image information for displaying the entire motion or the motion at hand, of the operator during the work, created by the motion capture technique on the virtual space. Furthermore, the information about the procedure may be video data obtained by capturing a state of work. When the display of the work procedure is selected by the operation of the item selection unit 102 of each piece of equipment 200 displayed on the display unit 11, this information is displayed on the display unit 11 by processing by the input/output control unit 38 described below. As a result, the operator can grasp a procedure of maintenance work of the target equipment 200 in advance before starting the work, and can proceed with the work while checking the procedure on the display unit 11 of the mobile terminal device 10a held by the operator.

### [Procedure information holding unit 35]

The procedure information holding unit 35 (FIG. 1) is one of the maintenance information holding units, and holds procedure information about a document such as a receipt generated in a procedure process. The procedure process is, for example, an approval procedure of an operating company of a facility when a manufacturer of the equipment and a company that undertakes maintenance work submit a maintenance plan. The document information also includes information converted into digital data. The procedure information holding unit 35 may store, in addition to such procedure information, various materials as procedure information.

When the display of the document information is selected by the operation of the item selection unit 102 displayed on the display unit 11 (FIGS. 2 and 3), the procedure information held by the procedure information holding unit 35 is displayed on the display unit 11 by processing by the input/output control unit 38 described below. As a result, it is possible to perform the procedure process on the virtual space.

### [Dose distribution calculation unit 36]

When the facility is a nuclear power plant, the dose distribution calculation unit 36 (FIG. 1) calculates the distribution of the radiation dose in the facility based on the data acquired from a plurality of dosimeters 2 disposed at various places in the facility, and creates the distribution image of the radiation dose. The distribution image may be, for example, a contour line image or a color-coded image. When the display of the dose distribution is selected by the operation of the item selection unit 102 displayed on the display unit 11 (FIGS. 2 and 3), the distribution image created by the dose distribution calculation unit 36 is displayed on the display unit 11 by processing by the input/output control unit 38 described below.

FIG. 6 is a diagram illustrating a display example (part 5) of the display unit 11 of the maintenance management support system 1 according to the embodiment. As shown in FIG. 6, the radiation distribution image created by the dose distribution calculation unit 36 is displayed on the display unit 11 in a manner superimposed on the layout information of respective areas 401 to 404 in a facility 400, the layout information being held by the layout information holding unit 31, by processing by the input/output control unit 38. In this case, the layout information displayed on the display unit 11 may be, for example, a plan view of the entire facility. Specifically, a position 10aa of the mobile terminal device 10a may be displayed on the display unit 11 of the mobile terminal device 10a in a manner superimposed on the layout information (plan view) about the facility 400 and the radiation distribution image.

As a result, the radiation environment of the facility can be grasped in real time, and the safety of the operator who intends to perform maintenance management of the equipment 200 can be secured.

### [Route creation unit 37]

The route creation unit 37 (FIG. 1) creates a traffic line route of the operator in the facility when maintaining each piece of equipment 200. Specifically, the traffic line route created by the route creation unit 37 is a route from the mobile terminal device 10a held by the operator to the destination point or the carry-out port during maintenance work of each piece of equipment. Here, the destination point is a location where maintenance work of the equipment designated by the terminal device 10 or the mobile terminal device 10a is performed, a storage place of tools necessary for maintenance of the equipment, or the like. The carry-out port is an opening for carrying out each piece of equipment to the outside of the facility when maintenance work of each piece of equipment is performed outside the facility. The traffic line route created by the route creation unit 37 is displayed on the display unit 11 by processing by the input/output control unit 38 when the display of the route information associated with the target equipment is selected by the operation of the item selection unit 102 displayed on the display unit 11 (FIGS. 2 and 3).

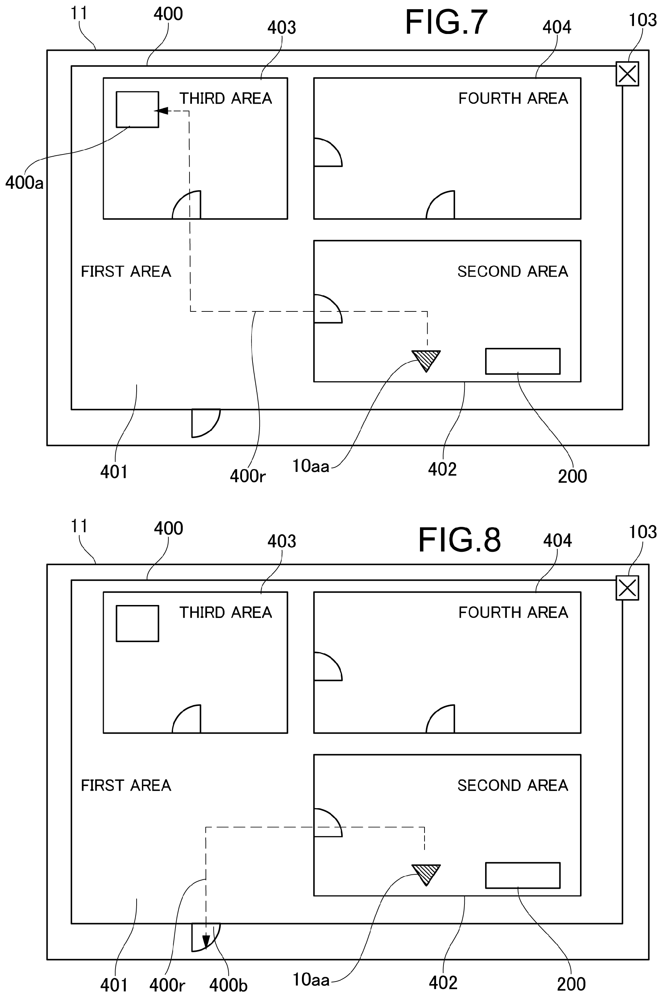

FIGS. 7 and 8 are diagrams illustrating display examples (part 6) and (part 7) of the display unit 11 of the maintenance management support system 1 according to the embodiment. A traffic line route 400r from the position 10aa of the mobile terminal device 10a to a destination point 400a (FIG. 7) or a carry-out port 400b (FIG. 8), the traffic line route 400r being created by the route creation unit 37, is displayed on the display unit 11 of the terminal device 10 or the mobile terminal device 10a in a manner superimposed on the layout information of respective areas 401 to 404 in the facility 400, the layout information being held by the layout information holding unit 31. In this case, the layout information displayed on the display unit 11 may be, for example, a plan view of the entire facility 400. As a result, regardless of the presence or absence of experience, the operator holding the mobile terminal device 10a can quickly convey the equipment 200 to be inspected and maintained to the destination point 400a or the carry-out port 400b.

### [Input/output control unit 38]

The input/output control unit 38 (FIG. 1) acquires information held by each functional unit from each functional unit of the information processing device 30 based on the operation of the terminal device 10 and the mobile terminal device 10a, and causes the display unit 11 of the terminal device 10 and the mobile terminal device 10a to display the acquired information. At this time, as illustrated in FIGS. 2 to 5, the input/output control unit 38 causes the display unit 11 to display the information acquired from the maintenance information holding unit including the maintenance plan holding unit 32, the track record information holding unit, the work information holding unit 34, and the procedure information holding unit 35 in a manner superimposed on the layout information about the facility, the layout information being acquired from the layout information holding unit 31. In addition, the input/output control unit 38 causes the display unit 11 to display maintenance information for each piece of equipment 200, the maintenance information being acquired from the maintenance information holding unit, in association with each piece of equipment 200 displayed on the display unit 11.

Furthermore, the input/output control unit 38 has a graphical user interface (GUI) function, and causes the display unit 11 (FIGS. 2 to 4) of each of the terminal device 10 and the mobile terminal device 10a to display images for operations such as the area selection unit 101 and the item selection unit 102. Furthermore, the input/output control unit 38 causes the display unit 11 to display a cancel selection unit 103 (see FIGS. 5 to 8) as necessary. The cancel selection unit 103 is a selection unit for switching the display screen of the display unit 11 to a screen on which the item selection unit 102 for each piece of equipment 200 is displayed. The input/output control unit 38 performs the display described above based on the operations of the area selection unit 101, the item selection unit 102, and the cancel selection unit 103 that are displayed on the display unit 11.

Note that the maintenance management support method performed by the maintenance management support system 1 is a procedure of displaying each piece of information on the display unit 11, the displaying being performed by a program included in each functional unit of the information processing device 30, and is the above-described procedure mainly executed by processing by the input/output control unit 38.

### <Effects of embodiment>

According to the embodiment described above, various types of maintenance information including the maintenance plan for each piece of equipment installed in the facility are displayed in association with each piece of equipment 200 indicated in the layout information about the facility. Therefore, it is possible to easily detect the maintenance information such as the maintenance schedule and the maintenance item for each piece of equipment and appropriately perform the maintenance work without depending on the experience of the operator.

Note that the present invention is not limited to the above-described embodiments and modifications, and further includes various modifications. For example, the above-described embodiments have been described in detail for easy understanding of the present invention, and are not necessarily limited to those having all the described configurations. Further, part of the configuration of one embodiment can be replaced with the configuration of another embodiment, and the configuration of another embodiment can be added to the configuration of one embodiment.

In addition, it is possible to add, delete, and replace other configurations for part of the configuration of each embodiment.

## Claims

1. A maintenance management support system comprising:
a terminal device including a display unit; and
an information processing device that causes the display unit to display maintenance management information about a plurality of pieces of equipment installed in a facility, wherein
the information processing device includes
a layout information holding unit that holds layout information about the facility, the layout information including an arrangement of the plurality of pieces of equipment,
a maintenance information holding unit that holds maintenance information about the each piece of equipment, and
an input/output control unit that causes the display unit to display the maintenance information about the each piece of equipment, the maintenance information being held by the maintenance information holding unit, in association with the each piece of equipment indicated by the layout information.

2. The maintenance management support system according to claim 1, wherein
the layout information holding unit holds, as the layout information, three-dimensional information for causing the display unit to display a virtual space in which the each piece of equipment is installed in the facility.

3. The maintenance management support system according to claim 2, wherein
the maintenance information holding unit includes a maintenance plan holding unit that holds a maintenance schedule and a maintenance item of the each piece of equipment, and
the input/output control unit causes the display unit to display a maintenance plan in association with the each piece of equipment in the virtual space.

4. The maintenance management support system according to claim 3, wherein
the input/output control unit marks equipment whose maintenance schedule held by the maintenance plan holding unit falls within a predetermined number of days from a current date and time, among the plurality of pieces of equipment, and causes the display unit to display the marked equipment.

5. The maintenance management support system according to claim 1, wherein
the maintenance information holding unit includes
a work information holding unit that holds work information about maintenance of the each piece of equipment, and
the input/output control unit causes the display unit to display work information about equipment designated by the terminal device, among work information about the each piece of equipment, the work information being held by the work information holding unit.

6. The maintenance management support system according to claim 5, wherein
the work information holding unit holds, as the work information, moving image information about a work procedure created by a motion capture technique.

7. The maintenance management support system according to claim 5, wherein
the work information holding unit holds, as the work information, information related to a work area required for maintenance work of the each piece of equipment.

8. The maintenance management support system according to claim 1, wherein
the maintenance information holding unit includes
a track record information holding unit that holds a maintenance schedule of maintenance performed in a past for the each piece of equipment and result information in the past maintenance, and
the input/output control unit causes the display unit to display track record information about equipment designated by the terminal device, among track record information about the each piece of equipment, the track record information being held by the track record information holding unit, in association with the equipment indicated by the layout information.

9. The maintenance management support system according to claim 1, wherein
the maintenance information holding unit includes
a procedure information holding unit that holds information about a procedure necessary for performing maintenance of the each piece of equipment, and
the input/output control unit causes the display unit to display procedure information about equipment designated by the terminal device, among procedure information about the each piece of equipment, the procedure information being held by the procedure information holding unit, in association with the equipment indicated by the layout information.

10. The maintenance management support system according to claim 1, wherein
the information processing device includes a dose distribution calculation unit that calculates a distribution of a radiation dose in the facility based on signals from a plurality of dosimeters installed in the facility, and
the input/output control unit causes the display unit to display the dose distribution calculated by the dose distribution calculation unit in a manner superimposed on layout information about the facility based on an instruction from the terminal device.

11. The maintenance management support system according to claim 1, wherein
the information processing device includes a route creation unit that creates a traffic line route of an operator in the facility when maintaining the each piece of equipment, and
the input/output control unit causes the display unit to display the traffic line route created by the route creation unit in a manner superimposed on layout information about the facility based on an instruction from the terminal device.

12. The maintenance management support system according to claim 1, wherein
the terminal device includes a mobile terminal device, and
the input/output control unit causes the display unit to display a position of the mobile terminal device in a manner superimposed on layout information about the facility.

13. The maintenance management support system according to claim 1, wherein
the input/output control unit displays, on the display unit, a selection unit that selects information to be displayed on the display unit.

14. A maintenance management support method of displaying maintenance management information about a plurality of pieces of equipment installed in a facility on a display unit of a terminal device, the maintenance management support method comprising:
holding, by a layout information holding unit, layout information about the facility, the layout information including an arrangement of the plurality of pieces of equipment;
holding, by a maintenance information holding unit, maintenance information about the each piece of equipment; and
causing, by an input/output control unit, the display unit to display the maintenance information about the each piece of equipment, the maintenance information being held by the maintenance information holding unit, in association with the each piece of equipment indicated by the layout information.
